# EUROPÄISCHE PATENTSCHRIFT

(11) **EP 3 953 773 B1**
(45) Veröffentlichungstag und Bekanntmachung des Hinweises auf die Patenterteilung: **18.06.2025**
(21) Anmeldenummer: 20723978.1
(22) Anmeldetag: 05.04.2020
(51) Int. Cl.: G05B 19/042, F24D 19/10, F24H 9/20

(54) **VERFAHREN ZUM BETRIEB EINER ENERGIETECHNISCHEN ANLAGE**
METHOD FOR OPERATING AN ENERGY SYSTEM
PROCÉDÉ POUR LE FONCTIONNEMENT D'UNE INSTALLATION ÉLECTROTECHNIQUE

(30) Priorität: 12.04.2019 DE 102019109756
(43) Veröffentlichungstag der Anmeldung: 16.02.2022
(73) Patentinhaber: Viessmann Holding International GmbH, 35108 Allendorf (Eder) (DE)
(72) Erfinder: SELIGER, Ingo, 35108 Allendorf (DE); SPITTLER, Dirk, 35039 Marburg (DE); BÖTTNER, Christoph, 35043 Marburg (DE)
(74) Vertreter: Wolf & Wolf Patentanwaltsgesellschaft mbH
(86) Internationale Anmeldenummer: PCT/DE2020/100280
(87) Internationale Veröffentlichungsnummer: WO 2020/207535

(56) Entgegenhaltungen:
- EP-A2- 2 088 379
- DE-A1- 102011 009 750
- DE-A1- 102011 011 022
- DE-A1- 19 647 216

## Beschreibung

Die Erfindung betrifft ein Verfahren zum Betrieb einer energietechnischen Anlage gemäß dem Oberbegriff des Patentanspruchs 1.

Ein Verfahren zum Betrieb einer energietechnischen Anlage der eingangs genannten Art ist allgemein bekannt, sodass es diesbezüglich keines besonderen druckschriftlichen Nachweises bedarf. Dieses Verfahren zum Betrieb einer energieteschnischen Anlage, insbesondere Heizungsanlage, funktioniert derart, dass einem in einem Speicherbehälter befindlichen Energieträgermedium einerseits Wärme zugeführt und andererseits von diesem abgeführt wird. Bei einem solchen Verfahren besteht das Problem, dass Defekte auftreten können, die verhindern, dass Wärme über das Energieträgermedium aus dem Speicherbehälter abgeführt (oder auch zugeführt) wird. Solche Defekte werden oft erst nach langer Zeit vom Benutzer der energietechnischen Anlage bemerkt und führen in der Zwischenzeit zu einer verringerten Effizienz der Anlage.

Das Dokument EP 2 088 379 A2 betrifft die Regelung eines Heizgerätes mit einer Messeinrichtung zur Erfassung der Heizwassertemperatur im Vorlauf in einem angeschlossenen Heizwasserkreislauf sowie mindestens einer Pumpe in mindestens einem Heizwasserkreislauf, wobei im Rahmen einer Testfunktion der Gradient der Heizwassertemperatur überwacht wird. Die Testfunktion umfasst auch ein Aussetzen des Pumpenbetriebs, um im Normalzustand kurzzeitig einen steigenden Temperaturgradienten zu erzeugen. Dabei wird eine Fehlermeldung ausgelöst oder wahlweise auch eine Störabschaltung veranlasst, wenn sich die Heizwassertemperatur nicht innerhalb einer vorgegebenen Zeit ändert und der Temperaturgradient niedriger als ein vorgegebener Schwellwert ist.

Das Dokument DE 10 2011 009750 A1 betrifft ein Heizgerät, wobei bei Bedarf ein fluides Medium mit einem Brenner erwärmt wird, wobei mit einem Temperatursensor die Temperatur des fluiden Mediums erfasst wird und aus einer zeitlichen Änderung der Temperatur ein Temperaturgradient gebildet wird. Der Brenner wird mit unterschiedlichen Leistungen betrieben und die entsprechenden Temperaturgradienten werden mit unterschiedlichen, leistungsabhängigen Grenzwerten verglichen.

Das Dokument DE 10 2011 011022 A1 betrifft die Zustandsbestimmung eines thermischen Pufferspeichers, wobei kontinuierlich die Temperatur im Pufferspeicher gemessen wird und daraus ein kontinuierlicher Speichertemperaturverlauf bestimmt wird. Basierend auf dem kontinuierlichen Speichertemperaturverlauf werden momentan nutzbare Energieinhalt und Speicherkapazität des Pufferspeichers berechnet.

Das Dokument DE 196 47 216 A1 betrifft die Überwachung von Funktion und Effizienz von Solaranlagen, die mit einem geschlossenen Solarkreislauf und einem geschlossenen Brauchwasser- oder Heißwasserkreislauf betrieben werden, wobei Kollektortemperatur, Speichertemperatur und Überwachungstemperatur gemessen und an eine Regelvorrichtung eingegeben werden, wobei eine Effizienz-Störmeldung erfolgt, wenn bei ständiger Kollektortemperatur (z. B. von über 50°C) nach einer vorgegebenen Überwachungsdauer (z. B. 60 min) eine gegebene Speichertemperatur (z. B. 30°C) nicht erreicht wird.

Der Erfindung liegt die Aufgabe zugrunde, ein Verfahren zum Betrieb einer energietechnischen Anlage der eingangs genannten Art zu verbessern. Insbesondere soll ein Verfahren geschaffen werden, bei dem eine unterbundene Wärmeabfuhr aus dem Energieträgermedium im Speicherbehälter (oder auch Wärmezufuhr in das Energieträgermedium im Speicherbehälter) detektiert wird.

Diese Aufgabe ist mit einem Verfahren zum Betrieb einer energietechnischen Anlage der eingangs genannten Art durch die im

Kennzeichen des Patentanspruchs 1 aufgeführten Merkmale gelöst.

Nach der Erfindung ist also vorgesehen, dass innerhalb eines festgelegten Überwachungszeitraums ein Temperaturgradient des Energieträgermediums im Speicherbehälter überwacht und eine Information erzeugt wird, wenn der Betrag des Temperaturgradienten innerhalb des Überwachungszeitraums einen festgelegten Grenzbetrag nicht erreicht.

Besonders bevorzugt ist dabei vorgesehen, innerhalb des festgelegten Überwachungszeitraums eine abfallende Temperatur des Energieträgermediums im Speicherbehälter überwacht und eine Information erzeugt wird, wenn der Betrag eines Temperaturgradienten der abfallenden Temperatur innerhalb des Überwachungszeitraums einen festgelegten Betrag nicht überschreitet bzw. unterhalb eines festgelegten Betrages bleibt.

Mit anderen Worten zeichnet sich das erfindungsgemäße Verfahren zum Betrieb einer energietechnischen Anlage, insbesondere Heizungsanlage, somit insbesondere dadurch aus, dass eine Absenkung der Temperatur im Speicherbehälter pro Zeiteinheit ab einer bestimmten Größe als funktionierende Wärmeentladung des Speicherbehälters und ein Fehlen eines solchen Temperaturgradienten im Gegenzug als Störung bei der Wärmeabfuhr aus dem Speicherbehälter interpretiert wird.

Andere vorteilhafte Weiterbildungen des erfindungsgemäßen Verfahrens zum Betrieb einer energietechnischen Anlage ergeben sich aus den abhängigen Patentansprüchen.

Der Vollständigkeit halber wird noch auf das Dokument DE 10 2004 035 167 A1 hingewiesen. Bei dieser Lösung werden Temperaturwerte erfasst und ausgewertet, sobald die gemessene Temperatur über einen bestimmten Wert steigt. Gerade nicht offenbart ist die erfindungsgemäße Maßgabe, dass eine Information erzeugt wird, wenn eine bestimmte Temperatur nicht erreicht wird.

Das erfindungsgemäße Verfahren zum Betrieb einer energietechnischen Anlage einschließlich seiner vorteilhaften Weiterbildungen gemäß der abhängigen Patentansprüche wird nachfolgend anhand der zeichnerischen Darstellung zweier Ausführungsbeispiele näher erläutert.

Es zeigt schematisch
- Figur 1: eine aus KWK-Modul und Spitzenlastkessel bestehende Heizungsanlage mit einem als Pufferspeicher ausgebildeten Speicherbehälter; und
- Figur 2: eine ebenfalls aus KWK-Modul und Spitzenlastkessel bestehende Heizungsanlage mit einem als Kombispeicher ausgebildeten Speicherbehälter.

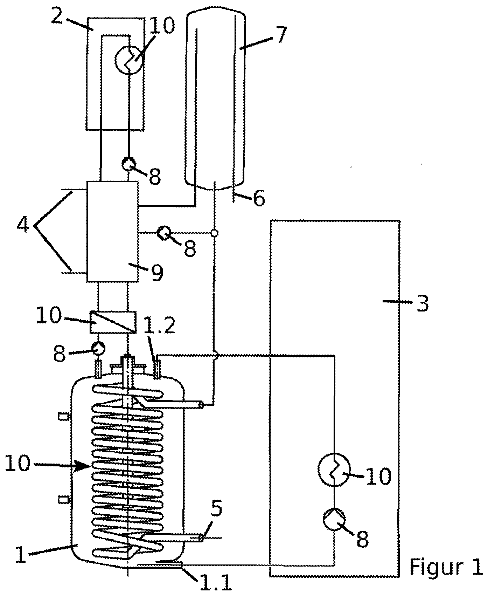

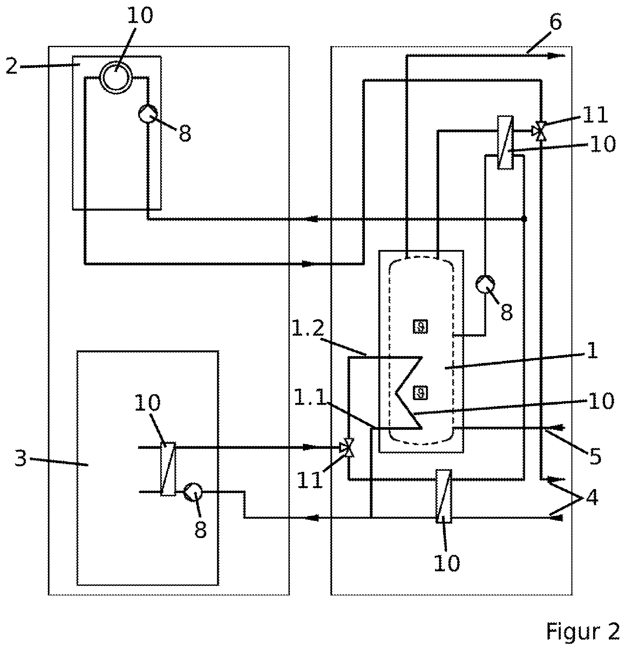

Bei dem erfindungsgemäßen Verfahren zum Betrieb einer energietechnischen Anlage, insbesondere Heizungsanlage, das zum Beispiel mit den in den Figuren 1 und 2 dargestellten Heizungsanlagen durchgeführt werden kann, wird zunächst in an sich bekannter Weise einem in einem Speicherbehälter 1 befindlichen Energieträgermedium (oder auch Wärmetragermedium) einerseits Wärme zugeführt und andererseits von diesem abgeführt.

Bei der Lösung gemäß Figur 1 ist der Speicherbehälter 1 dabei bevorzugt als Pufferspeicher ausgebildet, d. h. das Wärmeträgermedium soll bzw. kann in diesem Fall nicht als Trinkwasser verwendet werden. Vielmehr wird das Wärmeträgermedium über den Anschluss 1.1 vom Pufferspeicher abgeführt, mit einem noch zu erläuternden KWK-Modul 3 erwärmt und schließlich dem Pufferspeicher über den Anschluss 1.2 wieder zugeführt, d. h. dem im Speicherbehälter 1 befindlichen Wärmeträgermedium wird die Wärme letztlich per Konvektion zugeführt.

Bei der Lösung gemäß Figur 2 ist der Speicherbehälter 1 bevorzugt als Warmwasserspeicher ausgebildet, d. h. das Wärmeträgermedium dient in diesem Fall auch als Trinkwasser. Dabei ist im Speicherbehälter 1 ein Wärmeübertrager 10 vorgesehen, der über die Anschlüsse 1.1 und 1.2 mit einem noch zu erläuternden KWK-Modul 3 verbunden ist, d. h. im Speicherbehälter 1 befindliche Wärme wird dem Wärmeträgermedium per Wärmeleitung zugeführt.

Bezüglich des bereits erwähnten KWK-Moduls 3, das zum Beispiel eine Brennstoffzelle oder einen Stirling-Motor umfassen kann, ist dabei ferner bevorzugt vorgesehen, dass mit diesem erzeugte Wärme wahlweise, wie bereits erwähnt, dem Speicherbehälter 1 und/oder einem Heizkreis 4 zugeführt wird. Bei der Lösung gemäß Figur 1 wird dabei die erzeugte Wärme ausschließlich dem Speicherbehälter 1 zugeführt, bei der Lösung gemäß Figur 2 kann die vom KWK-Modul 3 erzeugte Wärme je nach Bedarf dem Speicherbehälter 1 und/oder dem Heizkreis 4 zugeführt werden.

Wie ersichtlich, verfügen die Heizungsanlagen gemäß den Figu-ren 1 und 2 jeweils vorzugsweise auch noch über einen sogenannten Spitzenlastkessel 2, also einer Wärmequelle, die zugeschaltet wird, wenn die vom zur Deckung der Grundlast vorgesehenen KWK-Modul 3 gelieferte Wärmemenge nicht ausreicht. Dabei ist weiterhin bevorzugt vorgesehen, dass mit dem Spitzenlastkessel 2 erzeugte Wärme wahlweise dem Speicherbehälter 1 und/ oder einem Heizkreis 4 zugeführt wird.

Ganz wesentlich für das erfindungsgemäße Verfahren ist nun, und dies gilt für alle beliebigen Ausführungsformen, dass innerhalb eines festgelegten Überwachungszeitraums ein Temperaturgradient des Energieträgermediums bzw. des Wärmeträgermediums im Speicherbehälter 1 überwacht und eine Information, vorzugsweise ein Informationssignal, erzeugt wird, wenn der Betrag des Temperaturgradienten innerhalb des Überwachungszeitraums einen festgelegten Grenzbetrag nicht erreicht.

Noch etwas genauer betrachtet, ist bei den dargestellten Ausführungsbeispielen besonders bevorzugt vorgesehen, dass innerhalb des festgelegten Überwachungszeitraums eine abfallende Temperatur des Energieträgermediums im Speicherbehälter überwacht und eine Information erzeugt wird, wenn der Betrag eines Temperaturgradienten der abfallenden Temperatur innerhalb des Überwachungszeitraums einen festgelegten Betrag nicht überschreitet.

Wird also bei einer solchen Anlage aus irgendwelchen Gründen die im Speicherbehälter 1 gespeicherte, insbesondere vom KWK-Modul 3 bereitgestellte Wärme nicht abgeführt, so kann dies mit Hilfe des erfindungsgemäßen Verfahrens aufgedeckt werden. Mit anderen Worten kann erfindungsgemäß also die verminderte Wirtschaftlichkeit der Heizungsanlage frühzeitig erkannt werden.

Dabei ist besonders bevorzugt vorgesehen, dass als festgelegter Wert für den Betrag des Temperaturgradienten 0,0225 K/s (bzw. 13,5 K in 10 Minuten) verwendet wird.

Außerdem ist bevorzugt vorgesehen, dass die Information einem Betreiber der Heizungsanlage mitgeteilt, vorzugsweise am Spitzenlastkessel 2 angezeigt, wird.

Weiterhin ist besonders bevorzugt vorgesehen, dass innerhalb des Überwachungszeitraums mehrere Zwischenzeiträume definiert werden und dass die Information nur dann erzeugt wird, wenn der Betrag des Temperaturgradienten innerhalb aller einzelnen Zwischenzeiträume den festgelegten Wert nicht überschreitet bzw. unterhalb des festgelegten Wertes bleibt.

Außerdem ist bevorzugt vorgesehen, dass ein Überwachungszeitraum (nur dann) begonnen wird, wenn die Temperatur des Wärmeträgermediums im Speicherbehälter 1 einen vorgegebenen Temperaturwert, vorzugsweise eine gewünschte Maximaltemperatur des Wärmeträgermediums im Speicherbehälter 1, erreicht.

Ferner ist bevorzugt vorgesehen, dass die Überwachung innerhalb des Überwachungszeitraums kontinuierlich erfolgt und und eine Information erst dann erzeugt wird, wenn der Betrag des Temperaturgradienten des Wärmeträgermediums den festgelegten Wert für mehr als eine festgelegte Zeitspanne, vorzugsweise 5 bis 15 Minuten, besonders bevorzugt 10 Minuten, nicht überschreitet.

Weiterhin ist bevorzugt vorgesehen, dass eine Toleranzzeit, vorzugsweise mehrere Tage, besonders bevorzugt 7 Tage, festgelegt und die Information erst nach anhaltender Unterschreitung des Betrags des Temperaturgradienten innerhalb der Toleranzzeit einem Betreiber der Heizungsanlage mitgeteilt wird.

Ferner wird noch darauf hingewiesen, dass die in den Figuren 1 und 2 dargestellten Anlagen in bekannter Weise noch über einen Kaltwasseranschluss 5 verfügen. Das dort eingespeiste Wasser wird nach Erwärmung über den Warmwasseranschluss 6 abgeführt, wobei bei der Lösung gemäß Figur 1, die zudem noch über ein sogenanntes, an sich bekanntes Ladesystem 9 verfügt, noch eine Zwischenspeicherung dieses Wassers in einem Warmwasserspeicher 7 erfolgt. Zum Transport der flüssigen Medien in der Heizungsanlage sind Pumpen 8 vorgesehen. Ventile 11 steuern die Strömungswege und Wärmeübertrager 10 dienen schließlich zur Übertragung von Wärme von einem zum anderen flüssigen Medium der Heizungsanlage.

### Bezugszeichenliste

- 1: Speicherbehälter
- 1.1: Anschluss
- 1.2: Anschluss
- 2: Spitzenlastkessel
- 3: KWK-Modul
- 4: Heizkreis
- 5: Kaltwasseranschluss
- 6: Warmwasseranschluss
- 7: Warmwasserspeicher
- 8: Pumpe
- 9: Ladesystem
- 10: Wärmeübertrager
- 11: Ventil

## Patentansprüche

1. Verfahren zum Betrieb einer energietechnischen Anlage, wobei einem in einem Speicherbehälter (1) befindlichen Energieträgermedium einerseits Wärme zugeführt und andererseits von diesem abgeführt wird,
**dadurch gekennzeichnet,**
**dass** innerhalb eines festgelegten Überwachungszeitraums ein Temperaturgradient des Energieträgermediums im Speicherbehälter (1) überwacht und eine Information erzeugt wird, wenn der Betrag des Temperaturgradienten innerhalb des Überwachungszeitraums einen festgelegten Grenzbetrag nicht erreicht.

2. Verfahren nach Anspruch 1,
**dadurch gekennzeichnet,**
**dass** innerhalb des festgelegten Überwachungszeitraums eine abfallende Temperatur des Energieträgermediums im Speicherbehälter (1) überwacht und eine Information erzeugt wird, wenn der Betrag eines Temperaturgradienten der abfallenden Temperatur innerhalb des Überwachungszeitraums einen festgelegten Betrag nicht überschreitet.

3. Verfahren nach Anspruch 1 oder 2,
**dadurch gekennzeichnet,**
**dass** innerhalb des Überwachungszeitraums mehrere Zwischenzeiträume definiert werden und dass die Information nur dann erzeugt wird, wenn der Betrag des Temperaturgradienten innerhalb aller einzelnen Zwischenzeiträume den festgelegten Wert nicht überschreitet.

4. Verfahren nach einem der Ansprüche 1 bis 3,
**dadurch gekennzeichnet,**
**dass** ein Überwachungszeitraum begonnen wird, wenn die Temperatur des Wärmeträgermediums im Speicherbehälter (1) einen vorgegebenen Temperaturwert erreicht.

5. Verfahren nach einem der Ansprüche 1 bis 4,
**dadurch gekennzeichnet,**
**dass** die Überwachung innerhalb des Überwachungszeitraums kontinuierlich erfolgt und und eine Information erst dann erzeugt wird, wenn der Betrag des Temperaturgradienten des Wärmeträgermediums den festgelegten Wert für mehr als eine festgelegte Zeitspanne, vorzugsweise 5 bis 15 Minuten, besonders bevorzugt 10 Minuten, nicht überschreitet.

6. Verfahren nach einem der Ansprüche 1 bis 5,
**dadurch gekennzeichnet,**
**dass** eine Toleranzzeit festgelegt und die Information erst nach anhaltender Unterschreitung des Betrags des Temperaturgradienten innerhalb der Toleranzzeit einem Betreiber der Heizungsanlage mitgeteilt wird.

7. Verfahren nach einem der Ansprüche 1 bis 6,
**dadurch gekennzeichnet,**
**dass** die Information einem Betreiber der Heizungsanlage mitgeteilt, vorzugsweise an einem Spitzenlastkessel (2) angezeigt, wird.

8. Verfahren nach einem der Ansprüche 1 bis 7,
**dadurch gekennzeichnet,**
**dass** der Speicherbehälter (1) als Pufferspeicher ausgebildet ist.

9. Verfahren nach einem der Ansprüche 1 bis 8,
**dadurch gekennzeichnet,**
**dass** der Speicherbehälter (1) als Warmwasserspeicher ausgebildet ist.

10. Verfahren nach einem der Ansprüche 1 bis 9,
**dadurch gekennzeichnet,**
**dass** mit einem KWK-Modul (3) erzeugte Wärme wahlweise dem Speicherbehälter (1) und/oder einem Heizkreis (4) zugeführt wird.

11. Verfahren nach einem der Ansprüche 1 bis 10,
**dadurch gekennzeichnet,**
**dass** mit einem Spitzenlastkessel (2) erzeugte Wärme wahlweise dem Speicherbehälter (1) und/oder einem Heizkreis (4) zugeführt wird.

## Claims

1. A method for operating an energy plant, wherein heat is supplied on the one hand to an energy carrier medium located in a storage container (1) and, on the other hand, is discharged therefrom,
**characterised in that**
a temperature gradient of the energy carrier medium in the storage container (1) is monitored within a defined monitoring period and information is generated if the amount of the temperature gradient does not reach a specified limit value within the monitoring period.

2. The method according to claim 1,
**characterised in that**
a falling temperature of the energy carrier medium in the storage container (1) is monitored within the defined monitoring period and information is generated if the absolute value of a temperature gradient of the falling temperature does not exceed a specified value within the monitoring period.

3. The method according to claim 1 or 2,
**characterised in that**
a plurality of intermediate periods are defined within the monitoring period and that the information is generated only when the absolute value of the temperature gradient does not exceed the specified value within all the individual intermediate periods.

4. The method according to any one of claims 1 to 3,
**characterised in that**
a monitoring period is started when the temperature of the heat transfer medium in the storage container (1) reaches a predetermined temperature value.

5. The method according to any one of claims 1 to 4,
**characterised in that**
the monitoring takes place continuously within the monitoring period and information is generated only when the absolute value of the temperature gradient of the heat transfer medium does not exceed the specified value for more than a defined period of time, preferably 5 to 15 minutes, particularly preferably 10 minutes.

6. The method according to any one of claims 1 to 5,
**characterised in that**
that a tolerance time is defined and the information is communicated to an operator of the heating system only after continuously remaining below the absolute value of the temperature gradient within the tolerance time.

7. The method according to any one of claims 1 to 6,
**characterised in that**
the information is communicated to an operator of the heating system, preferably displayed on a peak load boiler (2).

8. The method according to any one of claims 1 to 7, **characterised in that**
the storage container (1) is designed as a buffer tank.

9. The method according to any one of claims 1 to 8, **characterised in that**
the storage container (1) is designed as a hot water storage tank.

10. The method according to any one of claims 1 to 9, **characterised in that**
the heat generated by a CHP module (3) is optionally supplied to the storage container (1) and/or to a heating circuit (4).

11. The method according to any one of claims 1 to 10, **characterised in that**
heat generated by a peak load boiler (2) is optionally supplied to the storage container (1) and/or to a heating circuit (4).

## Revendications

1. Procédé opérationnel d'une installation technique énergétique, de la chaleur étant amenée d'une part à un agent vecteur d'énergie se trouvant dans un réservoir accumulateur (1) et étant évacuée à partir de celui-ci d'autre part,
**caractérisé**
**en ce que** dans une période de supervision fixée, un gradient de température de l'agent vecteur d'énergie est supervisé dans le réservoir accumulateur (1) et une information est générée, lorsque la valeur absolue des gradients de température n'atteint pas un montant limite fixé dans la période de supervision.

2. Procédé selon la revendication 1,
**caractérisé**
**en ce que** dans la période de supervision fixée, une température en chute de l'agent vecteur d'énergie dans le réservoir accumulateur (1) est supervisée et une information est générée lorsque dans la période de supervision, le montant d'un gradient de température de la température en chute n'excède pas un montant fixé.

3. Procédé selon la revendication 1 ou 2,
**caractérisé**
**en ce que** dans la période de supervision fixée, plusieurs périodes intermédiaires sont définies et en ce que l'information n'est générée que lorsque dans les périodes intermédiaires individuelles, la valeur absolue du gradient de température n'excède la valeur fixée.

4. Procédé selon l'une quelconque des revendications 1 à 3,
**caractérisé**
**en ce qu'**une période de supervision est entamée, lorsque la température de l'agent caloporteur dans le réservoir accumulateur (1) atteint une valeur de température prédéfinie.

5. Procédé selon l'une quelconque des revendications 1 à 4,
**caractérisé**
**en ce que** dans la période de supervision, la supervision s'effectue en continu et en ce qu'une information n'est générée que lorsque la valeur absolue du gradient de température de l'agent caloporteur n'excède pas la valeur fixée sur plus d'une durée fixée, de préférence de 5 à 15 minutes, de manière particulièrement préférentielle, de 10 minutes.

6. Procédé selon l'une quelconque des revendications 1 à 5,
**caractérisé**
**en ce qu'**un temps de tolérance est fixé et l'information n'est communiquée à un exploitant de l'installation de chauffage qu'après le dépassement persistant du gradient de température dans le temps de tolérance.

7. Procédé selon l'une quelconque des revendications 1 à 6,
**caractérisé**
**en ce que** l'information est communiquée à un exploitant de l'installation de chauffage, est affichée de préférence sur une chaudière de charge de pointe (2).

8. Procédé selon l'une quelconque des revendications 1 à 7,
**caractérisé**
**en ce que** le réservoir accumulateur (1) est conçu sous la forme d'un accumulateur tampon.

9. Procédé selon l'une quelconque des revendications 1 à 8,
**caractérisé**
**en ce que** le réservoir accumulateur (1) est conçu sous la forme d'un accumulateur d'eau chaude.

10. Procédé selon l'une quelconque des revendications 1 à 9,
**caractérisé**
**en ce que** de la chaleur générée avec un module de cogénération (3) est alimentée sélectivement vers le réservoir accumulateur (1) et / ou vers un circuit de chauffage (4).

11. Procédé selon l'une quelconque des revendications 1 à 10,
**caractérisé**
**en ce que** de la chaleur générée avec une chaudière de charge de pointe (2) est alimentée sélectivement vers le réservoir accumulateur (1) et / ou vers un circuit de chauffage (4).
